# EUROPÄISCHE PATENTANMELDUNG

(11) **EP 1 589 215 A1**
(43) Veröffentlichungstag der Anmeldung: **26.10.2005**
(21) Anmeldenummer: 05450055.8
(22) Anmeldetag: 24.03.2005
(51) Int. Cl.: F02M 35/024

(54) **Luftfilterabdeckung**

(30) Priorität: 25.03.2004 AT 2272004
(71) Anmelder: Kreuzbichler, Oswin, 5203 Köstendorf (AT)
(72) Erfinder: Kreuzbichler, Oswin, 5203 Köstendorf (AT)
(74) Vertreter: Babeluk, Michael

(57) **Zusammenfassung**

Die Erfindung betrifft eine Luftfilterabdeckung für eine Brennkraftmaschine mit innerer Verbrennung mit einer im Wesentlichen zylindrischen Filterpatrone (1), deren Mantelfläche als Filtermaterial ausgebildet ist, sowie mit einer Abdeckung (2), die an der Außenseite der Filterpatrone (1) vorgesehen ist. Das Eindringen von Feuchtigkeit kann zuverlässig dadurch verhindert werden, dass die Abdeckung (2) nur dem in der Gebrauchslage obere Teil der Filterpatrone (1) vorgesehen ist und nach unten hin offen ist.

## Beschreibung

Die Erfindung betrifft eine Luftfilterabdeckung für eine Brennkraftmaschine gemäß dem Oberbegriff von Patentanspruch 1.

Es ist ein vielfach auftretendes Problem, dass der Luftfilter von Motorrädern bei Regen feucht wird, so dass der Betrieb, der das Motorrad antreibenden Brennkraftmaschine beeinträchtigt wird. Um dieses Problem zu lösen, schlägt die US 1,209,911 A einen Luftfilter mit einer zylindrischen Abdeckung vor, die sich im Wesentlich konzentrisch zur Filterpatrone erstreckt. Durch einen solchen Luftfilter werden die oben beschriebenen Probleme zwar gemildert, es bleibt jedoch der Nachteil, dass der Strömungswiderstand im Ansaugtrakt ansteigt, was die Leistung der Brennkraftmaschine verringert. Darüber hinaus kann Feuchtigkeit, die ins Innere der Abdeckung eingedrungen ist, nicht abgeführt werden, so dass sie letztlich wiederum in die Brennkraftmaschine gelangt.

Die US 4,619.677 A zeigt eine Luftfilteranordnung, bei der der Luftfilter mit einem im Wesentlichen schneckenförmigen Gehäuse umgeben ist. Dieses Gehäuse weist eine Einströmöffnung auf, die nach unten offen ist. Auf diese Weise wird der Eintritt von Wasser weitgehend verhindert, das Gehäuse besitzt jedoch einen komplexen Aufbau und ist insbesondere zur Nachrüstung nicht geeignet. Außerdem ist der Anströmwiderstand relativ groß. Auch eine Lösung, wie sie in der GB 2 177 936 A beschrieben ist, kann die Brennkraftmaschine weitgehend vor dem Eindringen von Feuchtigkeit schützen. Auch hier treten die oben beschriebenen Nachteile auf.

Ferner zeigt die US 3,617.149 A ein Gehäuse mit einer relativ großen Einströmöffnung, das jedoch keinen Schutz vor eindringendem Wasser bietet.

Aufgabe der vorliegenden Erfindung ist es, diese Nachteile zu vermeiden und eine Lösung anzugeben, die einen einfachen Aufbau aufweist und die ohne eine Beeinträchtigung des Betriebes der Brennkraftmaschine das Eindringen von Feuchtigkeit weitestgehend verhindern kann. Eine weitere Aufgabe der Erfindung ist es, eine Lösung anzugeben, die auch geeignet ist, bestehende Motorräder nachzurüsten.

Erfindungsgemäß ist vorgesehen, dass die Abdeckung gemäß Patentanspruch 1 ausgebildet ist.

Durch die erfindungsgemäße Lösung wird der Großteil der Feuchtigkeit der in Form von Wassertropfen von oben einwirkt sicher von der Filterpatrone ferngehalten. Gleichzeitig wird jedoch der Strömungswiderstand im Einlasstrakt der Brennkraftmaschine nicht beeinträchtigt, da der untere Teil der Filterpatrone völlig frei zugänglich ist und auch der Spalt zwischen der Filterpatrone und der Abdeckung nicht nur über eine Stirnseite, sondern beidseitig über die gesamte Länge der Filterpatrone angeströmt werden wird.

Durch den Schutz des Luftfilters vor Feuchtigkeit kann der Verbrennungsvorgang auch bei Regen im optimalen Bereich gehalten werden, wodurch sich der Kraftstoffverbrauch und die Abgaswerte verbessern.

Die Erfindung ist sowohl für zylindrische als auch für abweichend geformte Filterpatronen anwendbar, wie etwa konisch geformte oder sonstige Filterpatronen. Besonders bevorzugt sind zylindrische Patronen mit kreisförmigem, elliptischem oder rechteckigen Querschnitt. Aber auch leicht konische Patronen sind problemlos möglich.

Besonders günstig ist es, wenn sich die Abdeckung über einen Winkel von etwa 180° in Umfangsrichtung der Filterpatrone erstreckt. Eine solche Lösung stellt einen guten Kompromiss zwischen einer zuverlässigen Abdeckung und einem möglichst geringen Strömungswiderstand dar. Außerdem ist auf diese Weise gewährleistet, dass eine einteilig aufgebaute Abdeckung ohne konstruktive Schwierigkeiten auch in bestehende Brennkraftmaschinen eingebaut werden kann.

Ein besonders zuverlässiger Schutz vor dem Eindringen von Feuchtigkeit kann erreicht werden, wenn die Abdeckung an mindestens einer Stirnseite der Filterpatrone über diese vorsteht. Es ist aber auch möglich, dass die Abdeckung die Filterpatrone an einer Stirnseite abschließt.

Das Nachrüsten kann besonders dadurch vereinfacht werden, dass die Abdeckung auf die Filterpatrone aufsteckbar ausgebildet ist. Durch diese Maßnahme und dadurch, dass die Abdeckung vorzugsweise aus Metall oder Kunststoff hergestellt ist, kann außerdem eine besonders einfache und kostengünstige Lösung erreicht werden.

Eine besonders wirkungsvolle und funktionelle Lösung ist gegeben, wenn die Abdeckung im Wesentlichen konzentrisch zur Filterpatrone ausgeführt ist, und wenn der Abstand zur Filterpatrone etwa 3 mm bis 10 mm, vorzugsweise 5 mm bis 8 mm beträgt.

In der Folge wird die Erfindung anhand des in der Figur ausgeführten Ausführungsbeispiels näher erläutert. Es zeigen schematisch:
- Fig. 1: einen erfindungsgemäßen Luftfilter in einer axonometrischen Darstellung;
- Fig. 2: bis Fig. 8 weitere Ausführungsvarianten der Erfindung.

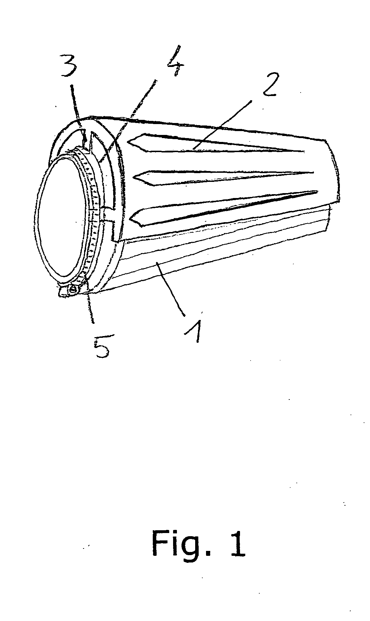

Der Luftfilter von Fig. 1 besteht aus einer Filterpatrone 1 und einer darauf aufgesetzten Abdeckung 2. Die Abdeckung 2 ist konzentrisch zur Filterpatrone 1 angeordnet und überdeckt diesen an der in Gebrauchslage oben befindlichen Seite in einem Winkel von etwa 190°. Distanzhalter 3 gewährleisten eine Breite des Spaltes 4 zwischen Patrone 1 und Abdeckung 2 von etwa 6 mm. Die Befestigung der Abdeckung 2 erfolgt in einfacher Weise über einen Schlauchbinder 5.

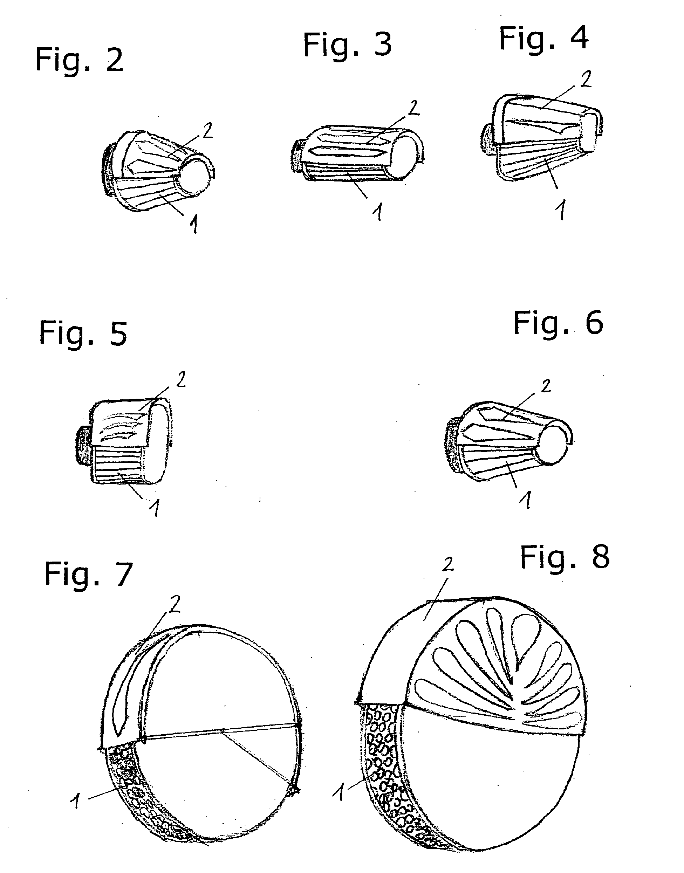

Die Ausführungsvariante von Fig. 2 zeigt einen konischen, das heißt kegelstumpfförmigen Luftfilter, dessen Abdeckung 2 einen Umfangswinkel von etwa 180° einnimmt.

Die Ausführungsvariante von Fig. 3 zeigt einen Luftfilter mit zylindrischer Filterpatrone mit kreisförmigem Querschnitt.

Bei der Ausführungsvariante von Fig. 4 ist die Filterpatrone 1 konisch mit einem im Wesentlichen rechteckigen Querschnitt, wobei die Kanten abgerundet sind.

Die Ausführungsvariante von Fig. 5 entspricht im Wesentlichen der von Fig. 3, wobei jedoch die Filterpatrone 1 allgemein zylindrisch ist.

Fig. 6 wiederum zeigt eine konische Variante und die Fig. 7 und Fig. 8 zeigen kreiszylindrische Ausführungsvarianten, wobei der Zylinderdurchmesser deutlich größer ist als die Länge.

Durch die erfindungsgemäße Lösung kann bei einem einfachen Aufbau ein zuverlässiger Schutz vor dem Eindringen von Feuchtigkeit gewährleistet werden.

## Patentansprüche

1. Luftfilterabdeckung für eine Brennkraftmaschine mit innerer Verbrennung mit einer im Wesentlichen zylindrischen Filterpatrone (1), deren Mantelfläche als Filtermaterial ausgebildet ist, sowie mit einer Abdeckung (2), die an der Außenseite der Filterpatrone (1) vorgesehen ist und die eine Zuströmöffnung für die Ansaugluft aufweist, **dadurch gekennzeichnet, dass** die Abdeckung (2) nur dem in der Gebrauchslage oberen Teil der Filterpatrone (1) vorgesehen ist und nach unten hin offen ist.

2. Luftfilterabdeckung nach Anspruch 1, **dadurch gekennzeichnet, dass** die Filterpatrone (1) im Wesentlichen kreiszylindrisch ausgebildet ist.

3. Luftfilterabdeckung nach Anspruch 1 oder 2, **dadurch gekennzeichnet, dass** sich die Abdeckung (2) über einen Winkel von etwa 180° in Umfangsrichtung der Filterpatrone (1) erstreckt.

4. Luftfilterabdeckung nach Anspruch 1 bis 3, **dadurch gekennzeichnet, dass** die Abdeckung (2) an mindestens einer Stirnseite der Filterpatrone (1) über diese vorsteht.

5. Luftfilterabdeckung nach einem der Ansprüche 1 bis 4, **dadurch gekennzeichnet, dass** die Abdeckung (2) die Filterpatrone (1) an einer Stirnseite abschließt.

6. Luftfilterabdeckung nach einem der Ansprüche 1 bis 5, **dadurch gekennzeichnet, dass** die Abdeckung (2) auf die Filterpatrone (1) aufsteckbar ausgebildet ist.

7. Luftfilterabdeckung nach einem der Ansprüche 1 bis 6, **dadurch gekennzeichnet, dass** die Abdeckung (2) aus Metall oder Kunststoff hergestellt ist.

8. Luftfilterabdeckung nach einem der Ansprüche 1 bis 7, **dadurch gekennzeichnet, dass** die Abdeckung (2) im Wesentlichen konzentrisch zur Filterpatrone (1) ausgeführt ist, und dass der Abstand zur Filterpatrone (1) etwa 3 mm bis 10 mm beträgt.
